# EUROPEAN PATENT SPECIFICATION

(11) **EP 1 769 058 B1**
(45) Date of publication and mention of the grant of the patent: **06.06.2012**
(21) Application number: 04803094.4
(22) Date of filing: 11.10.2004
(51) Int. Cl.: C11C 3/04, C11B 3/04, C11B 3/10, C11B 3/06, C10L 1/02, C10L 1/18

(54) **A NEW BIOFUEL COMPOSITION**
NEUE BIOBRENNSTOFFZUSAMMENSETZUNG
COMPOSITION DE BIOCARBURANT

(30) Priority: 02.07.2004 WO PCT/EP2004/007485; 26.07.2004 WO PCT/EP2004/008375
(43) Date of publication of application: 04.04.2007
(73) Proprietor: Monsanto S.A.S., 69673 Lyon Cedex (FR)
(72) Inventor: DESPEGHEL, Jean-Pierre, 45140 Ingre (FR)
(74) Representative: pronovem
(86) International application number: PCT/EP2004/011340
(87) International publication number: WO 2006/002683

(56) References cited:
- EP-A2- 0 647 406
- WO-A-91/15578
- WO-A-97/21340
- WO-A-03/085070
- AT-B- 397 966
- GB-A- 642 718
- ANONYMOUS: "Types of Oils" INTERNET ARTICLE, [Online] XP002327101 Retrieved from the Internet: URL:http://www.iasc-oils.org/types%20of%20 Oils.htm> [retrieved on 2005-04-26]
- GUNSTONE, FRANK D. ET AL: "The Lipid Handbook (Second Edition)", 1994, CHAPMAN & HALL, CAMBRIDGE, UK * page 88 - page 90 *
- AUSTRIAN BIOFUELS INSTITUTE: "Biodiesel - a Success story, The development of Biodiesel in Germany, Report for the International Energy Agency", INTERNET CITATION, [Online] June 2001 (2001-06), pages 1-41, XP002349451, VIENNA Retrieved from the Internet: URL:http://biodiesel.org/resources/reports database/reports/gen/20020201_gen-318.pdf> [retrieved on 2005-10-10]
- "Setting National Fuel Quality Standards, Paper 6: National Standard for Biodiesel - Discussion Paper", Department of the Environment and Heritage, Australian Federal Government , March 2003 (2003-03), Retrieved from the Internet: URL:http://www.biodiversity.ea.gov.au/atmo sphere/biodiesel/pubs/paper.pdf

## Description

### Field of the invention

The present invention relates to a new rapeseed alkyl ester composition. The present invention further relates to a process to obtain said new composition and its use as biodiesel.

### Background

For years, biodiesel has been considered as an alternative to petroleum based diesel. Biodiesel is a general term referring to a fuel comprised of mono-alkyl esters of long chain fatty acids derived from vegetable oils or animal fats. It can be used per se as fuel or as an additive, generally in a blend with petroleum-based diesel fuel.

The numerous advantages of using Biodiesel are well known. Indeed, it offers similar fuel economy, horsepower and torque to petroleum diesel while providing superior lubricity. Its use results in a substantial reduction of emissions of unburned hydrocarbons, carbon monoxide, and particulate matter. Moreover, it is essentially free of sulfur and aromatics.

Biodiesel is therefore regarded as a renewable, non-toxic and biodegradable fuel alternative or additive.

Nowadays biodiesel has to satisfy very strict specifications to insure proper performance. Indeed, the pure biodiesel (B100) must meet a standard, through many specified parameters, before being used as a pure fuel or being blended with petrodiesel.

Some of these specifications refer to the temperature properties of biodiesel, such as the flash point, the cetane number, the cloud point, etc., some others refer to its composition, such as glycerine content, water and sediment content, sulphated ash content, phosphorus content, etc., and some others measure the acid number, the kinematic viscosity, etc.

Because of the current environmental and security concerns, there have been many attempts to improve biodiesel and/or the methods for its preparation.

But the main drawbacks with biodiesel products remain their temperature properties and also their reactivity toward oxidation and polymerization.

There is a high demand of a biofuel composition which overcomes or mitigates the problems of prior art biofuels.
[009a] AT 397966B discloses a process for the preparation of fatty acid esters of lower monohydric alcohol from naturally occurring fats and oils which comply with the standards for diesel fuels.
[009b] WO 97/21340 discloses seeds, plants and oils having low FDA saturates; high oleic acid; low linoleic acid; high or low palmitic acid; low stearic acid; and low linoleic acid plus linolenic acid; and advantageous functional or nutritional properties in food applications.
[009c] WO 91/15578 discloses improved rape plants, seeds capable of forming the same, and a novel improved edible endogenous vegetable oil (for food applications) derived from the rapeseeds having a saturated fatty acid content of no more than 4 percent by weight in the form of stearic and palmitic acids based upon the total fatty acid content.
[009d] EP 647 406 A2 discloses a variety of Brassica napus designated AG019 and its oil for industrial applications.

The Australian document available on the internet (http://www.biodiversity.ea.gov.au/atmosphere/biodiesel/pubs/pa per.pdf), mentions new high oleic rapeseed varieties and also new low linolenic varieties as potential varieties to be used for biodiesel.

Nevertheless, having regard to the fatty acids composition of an oil or fat used for the production of biodiesel, it is generally admitted that the more saturated fatty acids, i.e. palmitic acid (16:0), and/or stearic acid (18:0) that are present:
- the higher the biodiesel stability (oxidation stability, thermal and storage stability);
- the lower the probability to form polymerised molecules under high temperatures and pressure (e.g. when unburned traces of biodiesel are washed down into the engine crankcase and exposed to high stress levels caused by high temperature and pressures);
- the higher the cetane-number for better engine performance.

It is also admitted that the presence of linolenic acid methyl ester in biodiesel increases the rate of biodiesel polymerisation adversely affecting engine operability. But in the meantime, its total absence in oil generates a drop of the cloud point or cold filter plugging point (CFPP).

### Summary of the invention

The present invention is based on the surprising discovery that the transesterification of rapeseed oil showing low, or even very low, saturated fatty acids content may nevertheless be advantageous, particularly when said oil composition shows high or very high oleic acid content and low or very low linolenic acid content.

The present invention provides a new rapeseed alkyl-ester composition, said composition comprising more than 72%, 75%, 80%, or 85% of mono-alkyl-ester(s) of oleic acid, less than 7%, 6,5%, 6% or 5,5% of mono-alkyl-ester(s) of saturated fatty acids and less than 4%, 3, 5%, 3%, 2%, or 1% of mono-alkyl-ester(s) of linolenic acid, based on the total weight of mono-alkyl-esters of fatty acids in the composition.

It is to be understood that any of the compositions of the present invention comprises further fatty acid esters that are characteristic of rapeseed oil.

Another object of the invention is a process for preparing a composition of the present invention comprising the transesterification step of a rapeseed oil comprising more than 72%, 75%, 80%, or 85% of oleic acid, less than 7%, 6, 5%, 6% or 5,5% of saturated fatty acids and less than 4%, 3,5%, 3%, 2%, 1,5% or 1% of linolenic acid , based on the total weight of fatty acids in the composition.

Such invention compositions may be used in engines, as biodiesel or as an additive in other compositions, e.g. fuels.

### Detailed description of the invention

The present invention relates to a new rapeseed mono-alkyl ester composition comprising at least 72%; 73%, 74%, 75%, 76%, 77%, 78%, 79%, 80%, 81%, 82%, 83%, 84%, 85%, 86%, 87%, 88%, 89%, or 90% of mono-alkyl ester(s) of oleic acid, less than 7%, 6,5%, 6% or 5,5% of mono-alkyl ester (s) of saturated fatty acids, and

less than 4%, 3,5%, 3%, 2,5%, 2%, 1,5% or 1% of mono-alkyl esters of linolenic acid , based on the total weight of mono-alkyl esters of fatty acids in the composition.

In a preferred composition of the invention, the mono-alkyl esters of said saturated fatty acids comprise less than 4,5%, preferably less than 4%, and more preferably less than 3,5% of alkyl-ester(s) of palmitic acid, based on the total weight of mono-alkyl-esters of fatty acids in the composition.

In a preferred composition of the invention, the mono-alkyl esters of said saturated fatty acids comprise between 4,5% and 3%, preferably between 4,1% and 3,5% of alkyl-ester(s) of palmitic acid, based on the total weight of mono-alkyl-esters of fatty acids in the composition.

In a preferred composition of the invention, the mono-alkyl esters of fatty acids are methyl ester, ethyl ester, propyl ester, or butyl ester of fatty acids. They may also consist of a mixture of two, three or four of said esters.

In a more preferred composition, the mono-alkyl esters of fatty acids are ethyl ester and / or methyl ester of fatty acids, and more preferably methyl ester of fatty acids.

In a preferred composition, the mono-alkyl esters of saturated fatty acids are methyl esters, ethyl esters, propyl esters or butyl esters of saturated fatty acids. They may also consist of a mixture of two, three or four of said esters.

In a preferred composition, the mono-alkyl esters of oleic acid are methyl ester, ethyl ester, propyl ester or butyl ester of oleic acid. They may also consist of a mixture of two, three or four of said esters.

In a preferred composition, the mono-alkyl esters of linolenic acid are methyl ester, ethyl ester, propyl ester, or butyl ester of linolenic acid. They may also consist of a mixture of two, three or four of said esters.

In a more preferred composition, the mono-alkyl esters of saturated fatty acids, of oleic acid or of linolenic acid are respectively methyl esters, and/or ethyl esters of said fatty acids.

And even more preferably, the mono-alkyl esters are methyl esters of saturated fatty acids, of oleic acid or of linolenic acid.

A more preferred composition of the invention comprises more than 73% of methyl ester of oleic acid and less than 3% of methyl ester of linolenic acid, and less than 7% of methyl esters of saturated fatty acids, based on the total weight of alkyl esters of fatty acids in the composition.

A more preferred composition of the invention comprises more than 80% of methyl ester of oleic acid and less than 3% of methyl ester of linolenic acid, and less than 7% of methyl esters of saturated fatty acids, based on the total weight of alkyl esters of fatty acids in the composition.

A preferred composition of the invention comprises less than 2%, or less than 1,5%, preferably less than 1% of methyl ester of linolenic acid and less than 7% of ethyl esters of saturated fatty acids, based on the total weight of alkyl esters of fatty acids in the composition.

The present invention also relates to a new rapeseed alkyl-ester composition comprising more than 72%; 73%, 74%, 75%, 76%, 77%, 78%, 79%, 80%, 81%, 82%, 83%; 84%, 85%, 86%, 87%, 88%, 89%, or 90% of mono-alkyl ester(s) of oleic acid and less than 4%, 3, 5%, 3%, 2, 5%, 2%, 1, 5% or 1% of mono-alkyl ester(s) of linolenic acid, and.less than
7% of ethyl esters of saturated fatty acids, and less than 15%, 14%, 13%, 12%, 11%, 10%, 9% or 8%, preferably less than 7% or 6% of mono-alkyl ester(s) of linoleic acid based on the total weight of mono-alkyl-esters of fatty acids in the composition.

A preferred rapeseed alkyl-ester composition of the invention may comprise more than 75% of mono-alkyl ester(s) of oleic acid, less than 2,5% of mono-alkyl ester(s) of linolenic acid, less than 7% of mono-alkyl ester(s) of saturated fatty acids. It may further comprise less than 13% of mono-alkyl ester(s) of linoleic acid, and/or less than 16% of mono-alkyl ester(s) of poly-unsaturated fatty acids, based on the total weight of mono-alkyl-esters of fatty acids in the composition.

A preferred rapeseed alkyl-ester composition of the invention comprises more than 85% of mono-alkyl ester(s) of oleic acid, less than 2% of mono-alkyl ester(s) of linolenic acid, less than 6,5% of mono-alkyl ester(s) of saturated fatty acids, based on the total weight of mono-alkyl-esters of fatty acids in the composition.

A process for preparing a composition according to the invention comprises a transesterification step of an rapeseed oil comprising at least 72%; 73%, 74%, 75%, 76%, 77%, 78%, 79%, 80%, 81%, 82%, 83%, 84%, or 85% of oleic acid and less than 4%, 3,5%, 3%, or 2% of linolenic acid, and less than 7%, preferably less than 6,5%, and more preferably less than 6% of saturated fatty acids, based upon the total weight of fatty acids present in the oil.

A process for preparing a composition according to the invention comprises a transesterification step of an rapeseed oil comprising:
- at least 72%; 73%, 74%, 75%, 76%, 77%, 78%, 79%, 80%, 81%, 82%, 83%, 84%, 85%, 86%, 87%, 88%, 89%, or 90% of oleic acid, and
- less than 4%, 3,5%, 3%, 2,5%, 2%, 1,5% or 1% of linolenic acid,
- and less than 7%, preferably less than 6, 5%, 6% or 5,5% of saturated fatty acids, and optionally
- less than 15%, 14%, 13%, 12%, 11%, 10%, 9% or 8%, preferably less than 7% or 6% of linoleic acid, and optionally
- less than 20%, 19%, 18%, 17% or 16%, preferably less than 7,5% of poly-unsaturated fatty acids, based on the total weight of fatty acids in the oil.

The transesterification may consist of a base catalysed transesterification of the rapeseed oil. This reaction is more commonly used today, since it requires low temperature and pressure conditions, and it yields very high conversion with minimal side reactions and minimal reaction time. Moreover, it is a direct conversion to mono-alkyl ester with no intermediate compounds.

The catalyst is generally sodium hydroxide or potassium hydroxide. It is generally dissolved in the alcohol(s) using a standard agitator or mixer.

The alcohol(s) can be methanol, ethanol, propanol and/or butanol. Excess alcohol is normally used to ensure total conversion of the rapeseed oil to its esters.

The alcohol(s) / catalyst mix is then charged into a closed reaction vessel and the rapeseed oil is added.

The system should be closed to the atmosphere to prevent the loss of the alcohol(s).

The reaction time may vary from 1 to 8 hours, depending on the temperature. The temperature is preferably chosen in the range consisting of the room temperature up to the temperature just above the boiling point of the alcohol used.

The conversion can be repeated (twice, three times or more) in order to raise the yield and obtain the required degree of purity, and to get very low glycerides content.

Once the reaction is complete, two phases containing respectively glycerin and alkyl esters can be separated. The glycerin phase being much more dense than the other, the two phases can be separated using merely the gravity, or faster by using a centrifuge.

Each of the phases has substantial amount of the excess alcohol(s) that was used in the reaction. This excess alcohol(s) can be removed by any appropriate process, for example with a flash evaporation process or by distillation.

The products of the reaction can be neutralized before or after the two phases, containing respectively glycerin and esters, are separated. This neutralization step can also take place before or after the alcohol(s) is (are) removed in each phase.

The alkyl esters composition thus obtained can be washed gently with warm water to remove residual catalyst or soaps.

It can also be distilled in an additional step to remove small amounts of colour bodies to produce a colourless composition.

The glycerin by-product can be submitted to further steps depending on the applications envisaged and the degree of purity required.

In a preferred embodiment, the alcohol used is methanol or ethanol. A mixture of both can be used and the ester composition obtained is thus a mixture of methyl ester and ethyl ester of fatty acids.

In a more preferred embodiment, methanol is used. And when methanol is used,the transesterification step can be referred to as a methanolysis step.

The transesterification may also consist of a direct acid catalysed transesterification of the rapeseed oil.

The alcohol can be methanol, ethanol, propanol and/or butanol.

In a preferred embodiment, the alcohol used is methanol, ethanol or a mixture of both.

Where methanol is used the transesterification step can also be referred to as a methanolysis step.

The transesterification may also consist of a two step reaction, the first being the conversion of the rapeseed oil to its fatty acids, and then the conversion of the fatty acids to alkyl esters with acid catalysis.

The alcohol can be methanol, ethanol, propanol and/or butanol.

In a preferred embodiment, the alcohol used is methanol, ethanol or a mixture of both. The transesterification step can also be referred to as a methanolysis step where methanol is used.

Whatever are the catalysts used and/or the alcohols used, the rapeseed oil used in a process of the invention, comes from an oil (extracted from rapeseed varieties) that comprises less than 7%, preferably less than 6,5%, 6% or 5,5% of saturated fatty acids,
- at least 72%; 73%, 74%, 75%, 76%, 77%, 78%, 79%, 80%, 81%, 82%, 83%, 84%, 85%, 86%, 87%, 88%, 89%, or 90% of oleic acid, and
- less than 4%, 3,5%, 3%, 2,5%, 2%, 1,5% or 1% of linolenic acid, and possibly
- less than 15%, 14%, 13%, 12%, 11%, 10%, 9% or 8%, preferably less than 7% or 6% of linoleic acid, and possibly
- less than 20%, 19%, 18%, 17% or 16%, preferably less than 7,5% of poly-unsaturated fatty acids, based upon the total weight of fatty acids present in the oil.

Said rapeseed oil can have a saturated fatty acids content comprised between 7% and 6%, preferably between 7% and 5%, more preferably between 7% and 5,5% and between 72% and 85% of oleic acid, and between 4% and 1% of linolenic acid, and possibly between 15% and 6% of linoleic acid, and/or between 20% and 7,5% of poly-unsaturated fatty acids, based upon the total weight of fatty acids present in the oil.

A variety from which such oil can be extracted may be Brassica napus varieties. In particular it can be extracted from varieties chosen from the group consisting of MSP05, MSP11 and MSP13 varieties, of which MSPOS is a registered variety.

MSP11 variety is maintained as a Budapest Treaty patent deposit with NCIMB under accession number NCIMB 41234 made July 9, 2004 by Monsanto S.A.S, Centre de Recherche de Boissay, 28310 Toury, France.

MSP13 variety is maintained as a Budapest Treaty patent deposit with NCIMB under accession number NCIMB 41237 made July 23, 2004 by Monsanto S.A.S, Centre de Recherche de Boissay, 28310 Toury, France.

MSP05 variety is also maintained as a Budapest Treaty patent deposit with NCIMB under accession number NCIMB 41233 made July 9, 2004 by Monsanto S.A.S, Centre de Recherche de Boissay, 28310 Toury, France.

A mixture of the oil extracted from two, three, four, five or six of these varieties can also be used to prepare a composition of the invention.

A preferred rapeseed oil comprises more than 73% of oleic acid and less than 3,5% of linolenic acid, and less than 7% of saturated fatty acids, based upon the total weight of fatty acids present in the oil.

A more preferred rapeseed oil comprises more than 75% of oleic acid and less than 3% of linolenic acid, and less than 7% of saturated fatty acids, based upon the total weight of fatty acids present in the oil.

A more preferred rapeseed oil comprises more than 75% of oleic acid and less than 2,5% of linolenic acid, and less than 7% of saturated fatty acids, based upon the total weight of fatty acids present in the oil.

A more preferred rapeseed oil comprises between 75% and 85% of oleic acid and between 2,5% and 1% of linolenic acid, and between 7% and 5%, preferably between 7% and 5,5% of saturated fatty acids, based upon the total weight of fatty acids present in the oil.

A variety from which such oil can be extracted may be chosen from the group consisting of MSP05, MSP11 and MSP13 varieties.

A more preferred rapeseed oil comprises more than 80% of oleic acid and less than 2% of linolenic acid, and less than 7%, preferably less than 6% of saturated fatty acids, based upon the total weight of fatty acids present in the oil.

A more preferred rapeseed oil comprises more than 85% of oleic acid and less than 2% of linolenic acid, and less than 6,5% of saturated fatty acids, based upon the total weight of fatty acids present in the oil.

A variety from which such oil can be extracted is for example MSP11 variety or MSP13 variety.

In a preferred rapeseed oil, the said saturated fatty acids comprise less than 4,5%, preferably less than 4%, more preferably less than 3,5% of palmitic acid based upon the total weight of fatty acids present in the oil.

In a preferred rapeseed oil, the said saturated fatty acids comprise between 4,5% and 3%, more preferably between 4,1% and 3,5% of palmitic acid based upon the total weight of fatty acids present in the oil.

A process of the invention may comprise, prior to the transesterification step, the steps of degumming the crude rapeseed oil, and of refining the resulting oil.

Crude oil is degummed to remove bulk of certain phosphatides such as lecithin.

The degumming treatment can consist of mixing the rapeseed oil with water or steam during a certain period of time, preferably about 30 min. to about 60 min., at a temperature between about 50° and about 90°C, preferably in presence of phosphoric acid, citric acid or other acidic materials. The gummy residue is dehydrated and the precipitated gums are removed by decantation or centrifugation.

The degumming step may also consist of a chemical process.

The oil thus obtained is refined (or neutralized) in order to reduce the free fatty acids, phospholipids, carbohydrates or proteins.

The most widely practiced form of refining method is an alkali treatment, usually sodium hydroxide, by which the free fatty acids are converted into water soluble soaps. Phospholipids, carbohydrates and proteins can also be changed to water soluble substances with hydration.

After the alkali treatment, the rapeseed oil is washed with (hot) water to remove residual water soluble soaps that can reduce stability of the oil. In addition, pigments of the oil, such as chlorophyll, also undergo partial decomposition during this step.

The refining step can also be referred to as a neutralization step.

A process of the invention may also comprise a bleaching step, after the refining step and before the transesterification step. In fact, a large amount of the colouring materials, such as chlorophyll and carotene, is already removed during the refining process. And the bleaching step aims to finalize the decolouration process.

A common method of bleaching is by absorption of the colour producing substances on an adsorbent material such as e.g. bentonite (or acid-activated earth clay), Fuller's earth, TONSIL earth, silica gel, etc.

A process of the invention may also comprise a step of extracting the oil from the rapeseed.

Oil extraction methods are well known and can be mechanical, via solvents (generally hexane), via enzymes and/or by means of high pressure CO₂.

A composition obtained by a process of the invention comprises more than 72%; 73%, 74%, 75%, 76%, 77%, 78%, 79%, 80%, 81%, 82%, 83%, 84%, 85%, 86%, 87%, 88%, 89% or 90% of mono-alkyl ester(s) of oleic acid, in particular methyl ester of oleic acid, and less than 4%, 3,5%, 3%, 2,5%, 2%, 1,5% or 1% of mono-alkyl ester(s) of linolenic acid, in particular methyl ester of linolenic acid, and less than 7%, 6,5%, 6% or 5,5% of mono-alkyl-esters of saturated fatty acids, in particular methyl ester of saturated fatty acid, based on the total weight of mono-alkyl esters of fatty acids in the composition. All the combinations are envisaged for a composition of the invention.

A composition obtained by a process of the invention may also contain small amount or traces of alkyl ester of palmitoleic acid, alkyl ester of stearic acid, alkyl ester of arachidic acid, alkyl ester of eicosenoic acid, alkyl ester of behenoic acid, alkyl ester of erucic acid, and/or mono-, di- and/or tri-glyderides.

A possible use of a composition according to the present invention is as biodiesel.

A composition of the invention suitable for this use preferably comprises more than 72%; 73%, 74%, 75%, 76%, 77%, 78%, 79%, 80%, 81%, 82%, 83%, 84%, 85%, 86%, 87%, 88%, 89% or 90% of ethyl ester of oleic acid, less than 4%, 3,5%, 3%, 2,5%, 2%, 1,5% or 1% of ethyl ester of linolenic acid, and less than 7%, preferably less than 6,5%, 6% or 5,5% of ethyl esters of saturated fatty acids, based on the total weight of alkyl esters of fatty acids in the composition.

A composition of the invention suitable for this use preferably comprises more than 75%, preferably between 75% and 85% of ethyl ester of oleic acid and less than 3%, preferably between 3% and 1% of ethyl ester of linolenic acid, and less than 7%, 6,5% or 6%, preferably between 7% and 5%, more preferably between 7% and 5,5% of ethyl esters of saturated fatty acids, based on the total weight of alkyl esters of fatty acids in the composition.

A composition of the invention suitable for this use preferably comprises more than 75% of ethyl ester of oleic acid and less than 3% of ethyl ester of linolenic acid, and less than 7% of ethyl esters of saturated fatty acids, based on the total weight of alkyl esters of fatty acids in the composition.

A composition of the invention suitable for this use more preferably comprises more than 72% ; 73%, 74%, 75%, 76%, 77%, 78%, 79%, 80%, 81%, 82%, 83%, 84%, 85%, 86%, 87%, 88%, 89% or 90% of methyl ester of oleic acid, less than 4%, 3,5%, 3%, 2,5%, 2%, 1,5% or 1% of methyl ester of linolenic acid, and less than 7%, 6,5%, 6% or 5,5% of methyl esters of saturated fatty acids based on the total weight of alkyl esters of fatty acids in the composition.

A composition of the invention suitable for this use more preferably comprises more than 75%, preferably between 75% and 85% of methyl ester of oleic acid, and less than 3%, preferably between 3% and 1% of methyl ester of linolenic acid, and less than 7%, preferably between 7% and 5%, more preferably between 7% and 5,5% of methyl-ester of saturated fatty acids, based on the total weight of alkyl esters of fatty acids in the composition.

A composition of the invention suitable for this use may also comprise less than 15%, 14%, 13%, 12%, 11%, 10%, 9% or 8%, preferably less than 7% or 6% of methyl- and/or ethyl ester(s) of linoleic acid, based on the total weight of mono-alkyl-esters of fatty acids in the composition.

A composition of the invention suitable for this use may also comprise less than 20%, 19%, 18%, 17% or 16%, preferably less than 7,5% of mono-alkyl ester(s) of poly-unsaturated fatty acids, based on the total weight of mono-alkyl-esters of fatty acids in the composition.

Prior to use as a commercial biodiesel, the composition of the invention must be analysed to ensure it meets the specifications established by the European Union, the American Society for Testing and Materials (ASTM) or other national or international instances.

The most important parameters (or specifications) can be summed up in the following table (Table I), together with the methods used in the examples section to measure said parameters.

**Table I**

| **Parameters** | **Methods** | **Units** |
|---|---|---|
| Ester content | HPLC | % mass |
| Cetane Number | L.C. NF EN ISO 5165 ASTM D 613 | - |
| Kinematic Viscosity (40 °C) | ISO 3104 | mm²/s |
| Pourpoint | ISO 3016 | °C |
| Water content | Karl-fisher | mg/kg |
| Acid Number | NF T 60-204 | mg KOH/g |
| Saponification Number | NF ISO 3657 | mg KOH/g |
| Iodine Value | NF ISO 3961 | g I₂/100 g |
| Peroxide Value | NF T 60 220 | meq O₂/kg |
| Unsaponifiable matter | NF T 60-205-1 | % |
| Glycerides content | HPLC | % |
| Linolenic acid methyl ester | Gas Chromatography | % |
| Free glycerol | HPLC | % |
| Oxidation stability (110°C, 10 1/h - TIR | EN 14112 | hours |

A composition of the invention comprising less than 7%, 6,5%, 6% or 5,5% of methyl esters of saturated fatty acids and further comprising more than 72% of methyl ester of oleic acid and less than 3% of methyl ester of linolenic acid, based on the total weight of alkyl esters of fatty acids in the composition, shows very good properties suitable for its use as biodiesel or as an additive in fuels. These properties are summed up in the following table (Table II).

**Table II**

| **Parameters** | **Rapeseed methyl ester composition of the invention** | **E.U.** (prEN 14214) | **USA** (ASTM D6751-02) | **Units** |
|---|---|---|---|---|
| Ester content | 98,6 to 99,5 | ≥ 96,5 | - | % mass |
| Cetane Number | 52,1 to 55,3 Or 52,1 to 57,2 | ≥ 51 | ≥ 47 | - |
| Kinematic Viscosity (40 °C) | 4,58 to 4,87 | 3,5 to 5 | 1,9 to 6,0 | mm²/s |
| Pourpoint | -12,5 to -16 | ≤0 | | °C |
| Water content | <500 | ≤500 | - | mg/kg |
| Acid Number | 0,04 to 0,10 | ≤0,5 | ≤0,8 | mg KOH/g |
| Saponification Number | 187,9 to 191,8 Or 185,7 to 191,8 | - | - | mg KOH/g |
| Iodine Value | 88,9 to 105,4 | ≤120 | - | g I₂/100 g |
| Peroxide Value | 4,1 to 8,7 Or 2,13 to 8,7 | - | - | meq O₂/kg |
| Unsaponifiable matter | 0,78 to 0,83 Or 0,65 to 0,83 | - | - | % |
| Linolenic acid methyl ester | 0,84 to 9,60 | ≤12 | | % |
| Glycerides content | 1,3 to 1,4 Or 1, to 1, 4 | ≤1,2 | - | % |
| Free glycerol | traces | ≤0,02 | ≤0,02 | % |
| Phosphorus content | <10 | ≤10 | ≤10 | mg/kg |
| Oxidation stability | 5 to 18,5 | ≥6 | - | hours |

Having regard to a rapeseed methyl ester composition of the invention, few parameters can be noticed as remarkable, in particular the cetane number, the oxidation stability, the iodine value and the pour point of said composition.

The cetane number is a relative measure of the interval between the beginning of injection and auto-ignition of the fuel. The higher the number, the shorter the delay interval. Fuels with low cetane numbers will cause hard starting, rough operation, noise and exhaust smoke.

In view of its cetane number, a composition of the invention will help diesel engines to operate better.

The iodine value of an oil is normally associated with the potential for the oil to polymerise, as it is a measure of the proportion of unsaturated bonds. It is admitted that the use of biodiesel with an iodine number that exceeds 115 increases the risk that the engine lubricating oil will polymerise over time.

In view of the iodine value of a composition according to the present invention, the risk of polymerization will be drastically diminished when using said composition.

The good oxidation stability showed by the compositions of the invention means that the risks of generating hydroperoxide is diminished, preventing the peroxidation chain mechanism which damages the fuel system components. It is also an indication that the fuel darkening and the formation of insolubles, sediment and gum will be substantially attenuated.

The pour point of a composition of the invention indicates a good biodiesel cold weather performance.

A rapeseed alkyl ester composition of the invention may also be used as a solvent, for example to dissolve petroleum.

The invention will be illustrated with further details in the following examples, which should not be construed as limiting the scope of the invention in any way.

### EXAMPLES

### Example 1: Oil extraction

### a). Mechanical extraction

The rapeseed oil are pressed in a single screw press, Täby 40A press, with a diameter of 6,5 mm, at a temperature comprised between about 40° and about 60°C.

The following varieties are pressed:
MSP05 and MSP11 varieties.

The result of that step can be summarized in the following table (Table III).

**Table III.**

| Varieties | CARACAS | MSP05 | MSP11 |
|---|---|---|---|
| Seeds, kg | 19,4 | 19,3 | 19,5 |
| Dry matter, kg | 18,34 | 18,21 | 18,33 |
| Theoretical oil, kg | 8,93 | 8,57 | 8,28 |
| Non filtered oil, kg | 6,8 | 6,4 | 6,6 |
| Yield, % | 76,14 | 74,68 | 72,3 |
| Oil cake, kg | 11,9 | 12,7 | 13,0 |
| Easy to press / Difficult to press | Easy | Easy | Easy |

In this example and in the following examples, the CARACAS variety is used as a point of reference.

It can be noted that the yields are very high, between about 70% and about 75%.

### b). Hexane extraction

### Material of extraction

Extractor 5L, a thermic bath and an extraction cartridge 13L

### Conditions of the extraction

The temperature of the bath is set at 82,5°C for a flow rate of hexane of about 2 L/h. The extraction process lasts about 16 hours. Because of the important amount of oil cake, the extraction process is repeated twice. The hexane contained in the cartridge is used again for second extraction, which lasts 17 hours.

The oil extracted mechanically, and the oil extracted with hexane are mixed and filtered on a settling in order to remove the solid particles. The oil is then distilled on a "R10" at a temperature of 90°C, 100 mbar during 1 hour. The flow rate of hexane is about 2 1/h. The residual content of hexane is about 4% to about 6%, which will facilitate the further steps of purification process.

The results of the extraction steps are summarized in the following table (Table IV)

**Table IV.**

| Varieties | CARACAS | MSP05 | MSP11 |
|---|---|---|---|
| Crude oil, kg Hexane | 9,3 | 8,7 | 8,0 |
| content, % | 6,03 | 4,4 | 2,2 |
| Yield, % (*) | 97,4 | 97,0 | 97,3 |

| | | | |
|---|---|---|---|
| (*) based on the total oil content in the seeds. | | | |

### Example 2: Degumming step.

The degumming and the neutralization are both carried out in 10 litres temperature controlled reaction vessel.

In order to facilitate the degumming, mainly the decantation, the residual hexane content is adjusted at 6%.

The degumming step aims to remove the phospholipids naturally present in the crude oil.

The oil is introduced in the reaction vessel, then the temperature is raised up to 65°C while the oil is agitated. At 65°C, phosphoric acid (1,5%) and water (6% based on the oil weight) are added. The mixture is agitated during 10 min. and then the temperature is raised up to 75°C. The mixture is agitated at this temperature of 75°C during 30 min. Then, the decantation is allowed to proceed during 30 min. Finally, the heavier phase is removed.

The results of this step are summarized in the following table (Table V).

**Table V.**

| Variety | CARACAS | MSP05 | MSP11 |
|---|---|---|---|
| Dry crude oil, g | 8,7 | 8,2 | 7,73 |
| H₃PO₄ at 75%, g | 17,4 | 16,5 | 15,5 |
| H₂O, g | 521 | 494 | 464 |
| Decantation | Very good | correct | correct |

### Example 3: Refining or neutralization step.

This step aims to remove the free fatty acids present in the degummed oil.

The degummed oil is maintained at 75°C in a reaction vessel in which sodium hydroxide is added in excess of 10% compared to theoretical amount needed and the mixture is agitated during 5 min.

Then the temperature is raised up to 95°C and maintained at 95°C during 30 min. The reaction vessel is cooled down at 65°C and the two phases of the reaction mixture are allowed to separate by gravity during 20 min.

Then the aqueous phase is withdrawn (pH of 11-12) and the oil is washed with demineralized water until the used water is neutral.

The oil is then dried at 110°C under vacuum during 30 min.

The process and the results are summarized in the following table (Table VI)

**Table VI.**

| Variety: | CARACAS | MSP05 | MSP11 |
|---|---|---|---|
| NaOH 98,63 %, g | 4,00 | 2,73 | 3,25 |
| H₂O, g | 521 | 494 | 464 |
| Washing steps | 3 | 3 | 4 |
| Phases separation | Good separation, aqueous phase very dark, interface with flocs. | | |
| Degummed Oil, kg | 8.7 | 8.2 | 7,73 |
| Acid number of the degummed oil, mg KOH/g | 0,26 | 0,33 | 0,32 |
| Refined Oil, kg | 8.3 | 7 7.5 | 7,58 |
| Acid number of the refined oil, mg KOH/g | 0,17 | 0,12 | 0,13 |
| Yields, % | 95,40 | 91,46 | 98,06 |

The varieties have all a low acid number: below 1 mg KOH/g. Usually, the acid number of common rapeseed oil is about 2 to about 3,5 mg KOH/g.

With an acid number below 0,3 mg KOH/g, the degumming and refining steps are regarded as very efficient.

### Example 4: Bleaching step.

The refined oil is introduced in the reaction vessel with 3%, based on the weight of the oil, of TONSIL^{®} earth.

The temperature is raised up to 95°C under vacuum with a pressure of 200 mbar. After 15 min. the pressure is diminished to 100 mbar and then to 15 mbar after 10 min.

The decolouration continues at 95°C, 15 mbar during 2 hours, and then the temperature is reduced to a temperature of 60°C. At 60°C, 0,5% of promosil, based on the weight of the oil, is added to improve the filtration, which is carried out on a filter ("cloche" filter), at a flow rate of about 20L/h.

The oil is then cooled down with the ambient temperature during 1 hour and stored under nitrogen atmosphere.

The results of the bleaching step are summarized in the following table (Table VII).

**Table VII**

| Variety | CARACAS | MSP05 | MSP11 |
|---|---|---|---|
| Refined oil, g | 5160 | 4880 | 3684 |
| Acid number of the refined oil (mg de KOH/g) | 0,17 | 0,12 | 0,13 |
| Bleached Oil, g | 4930 | 4650 | 3508 |
| Acid number of the bleached oil (mg de KOH/g) | 0,22 | 0,20 | 0,20 |
| Yield, % | 95,54 | 95,29 | 95,22 |

The bleaching step using TONSIL earth has a small impact on the acid numbers, which are slightly higher in comparison with the acid numbers before this bleaching step.

### Example 5: Fatty acids content.

The fatty acids content of the oils extracted from the different rapeseed varieties have been evaluated by gas chromatography and the results are summarized in the following table (Table VIII).

**Table VIII**

| Fatty acids | CARACAS | MSP05 | MSP11 |
|---|---|---|---|
| C16:0 Palmitic | 4,99 | 4,33 | 3,38 |
| C16:1 Palmitoleic | - | 0,31 | 0,29 |
| C18:0 Stearic | 1,60 | 1,64 | 2,09 |
| C18:1 Oleic | 63,15 | 75,92 | 84,91 |
| C18:2 Linoleic | 17,73 | 12,76 | 5,47 |
| C18:3 (n-6) gamma Linolenic | - | - | - |
| C18:3 (n-3) alpha Linolenic | 10,62 | 2,75 | 2,01 |
| C20:0 Arachidic | 0,58 | 0,56 | 0,58 |
| C20:1 Eicosenoic | 1,03 | 1,14 | 1,08 |
| C22:0 Behenic | 0,30 | 0,39 | - |
| C22:1 Erucic | - | 0,20 | - |
| C24:0 Lignoceric | - | - | |
| C24:1 Nervonic | - | - | |
| Others | - | - | 0,19 |
| Total | 100 | 100 | 100 |
| | | | |
| Saturated acid | 7,47 | 6,92 | 6,05 |
| Mono-unsaturated acid | 64,18 | 77,57 | 86,28 |
| Poly-unsaturated acid | 28,35 | 15,51 | 7,48 |

### Example 6: Methanolysis.

Approximately 2000 g of oil extracted from rapeseed, degummed and refined according to the process described in examples 2 and 3, is mixed with 300 g of methanol in a reaction vessel. About 5 to 10 g of sodium hydroxide added to the same reaction vessel.

The methanolysis takes place during about 2 hours, at a temperature comprised between approximately 40° C and 60° C, under atmospheric pressure.

These conditions provide essentially about 95 % conversion of added triglycerides to fatty acids methyl esters.

After the settling, the two phases of the reaction mixture are allowing to stand and separate to provide methyl esters in the upper phase, and a mixture of glycerol and approximately 2% wt. residual methyl esters, methanol, and base in the lower phase. The upper phase is used in a second conversion.

The same amount as in the first conversion of methanol and of alkaline catalyst is then introduced in the reaction vessel. The same conditions of temperature and pressure are applied (between about 40° and 60°C, atmospheric pressure). In these conditions more than 98 % of triglycerides are converted to fatty acids methyl esters.

The fatty acids methyl esters are washed and dried. More than 1900 g of fatty acids methyl esters are weighted, with a purity of higher than 98%. The mass yield, methyl esters / refined oil, is good.

The results of the methanolysis are summed up in the following table (Table IX).

**Table IX**

| Variety | | CARACAS | MSP05 | MSP11 |
|---|---|---|---|---|
| 1^{st} conversion yield | % esters | 98,3 | 98,1 | 68,53 |
| | % mono- (**) | 0,7 | 2,0 0,6 | 1,47 |
| | % di- (**) | 1,0 | 0,9 | 8,72 |
| | % tri- (**) | 0,1 | 0,4 | 21,29 |
| 2^{nd} conversion yield | % esters | 98,8 | 98,7 | 99,48 |
| | % mono- (**) | 0 | 0,4 | 0,42 |
| | % di- (**) | 1,2 | 0,9 | 0,10 |
| | % tri- (**) | 0 | 0 | 0 |
| Refined oil, g | | 3029 | 2514 | 3784 |
| Methyl esters, g | | 2972 | 2407 | 3448 |
| Yield, % (*) | | 98,12 | 95,74 | 91,12 |

| | | | | |
|---|---|---|---|---|
| (*) methyl esters / refined oil (**) mono-, di-, tri-glycerides | | | | |

### Example 7: Methyl esters content.

The methyl esters content of the rapeseed methyl ester composition obtained by the process described in example 6 has been evaluated by gas chromatography and the results are summarized in the following table (Table X).

**Table X**

| Methyl ester | CARACAS | MSP05 | MSP11 |
|---|---|---|---|
| C16:0 Palmitic | 4,71 | 4,31 | 4,40 |
| C16:1 Palmitoleic | - | 0,24 | 0,34 |
| C18:0 Stearic | 1,66 | 1,60 | 1,83 |
| C18:1 Oleic | 63,39 | 76,31 | 85,33 |
| C18:2 Linoleic | 17,66 | 12,74 | 5,32 |
| C18:3 (n-6) gamma Linolenic | - | - | - |
| C18:3 (n-3) alpha Linolenic | 10,47 | 2,64 | 1,97 |
| C20:0 Arachidic | 0,58 | 0,54 | 0,20 |
| C20:1 Eicosenoic | 0,91 | 1,06 | 0,61 |
| C22:0 Behenic | 0,62 | 0,56 | - |
| C22:1 Erucic | - | - | - |
| C24:0 Lignoceric | - | - | - |
| C24:1 Nervonic | - | - | - |
| Others | - | - | - |
| Total | 100,00 | 100,00 | 100,00 |
| | | | |
| Saturated acids | 7,57 | 7,01 | 6,43 |
| Mono-unsaturated acids | 64,30 | 77,61 | 86,28 |
| Poly-unsaturated acids | 28,13 | 15,38 | 7,29 |

### Example 8: Specifications of a rapeseed methyl ester composition for use as biodiesel.

The rapeseed methyl ester composition obtained has been analysed and compared with the specifications of a biodiesel as established by the European Union. The results of such analysis are summed up in the following table (Table XI).

**Table XI**

| Parameters | Units | E.U. | CARACAS | MSP05 | MSP11 |
|---|---|---|---|---|---|
| Ester content | % mass | ≥96,5 | 98,8 | 98,7 | 99,5 |
| Cetane Number | - | ≥51 | 51,2 | 54,0 | 55,3 |
| Kinematic Viscosity (40 °C) | mm2/s | 3,5 to 5 | 4,50 | 4,66 | 4,64 |
| Pourpoint | °C | ≤0 | -14,0 | -14,5 | -12,5 |
| Water content | mg/kg | ≤500 | ≤500 | ≤500 | ≤500 |
| Acid Number | mg KOH/g | ≤0,5 | 0,04 | 0,05 | 0,10 |
| Saponification Number | mg KOH/g | - | 191,6 | 191,8 | 188,6 |
| Iodine Value | g I2/100 g | ≤120 | 113,5 | 96,0 | 88,9 |
| Peroxide Value | meq O2/kg | - | 6,2 | 4,1 | 4,67 |
| Unsaponifiable matter | % | - | 0,98 | 0,81 | 0,63 |
| Linolenic acid methyl ester | % | ≤12 | 10,47 | 2,64 | 2,0 |
| Glycerides content | % | ≤1,2 | 1,1 | 1,4 | 0,52 |
| Free glycerol | % | ≤0,02 | trace | trace | trace |
| Phosphorus content | mg/kg | ≤10 | ≤10 | ≤10 | ≤10 |
| Oxidation stability | hours | ≥6 | 5,0 | 9,0 | 18,5 , |

Currently, methyl esters of rapeseed oil are used with low methyl ester of oleic acid content. The cetane number measured for such biodiesel can hardly reach 51.

As shown in Table XI, a rapeseed methyl ester composition according to the invention has a very high quality, with a cetane number higher than 51 and an iodine value pretty below 120.

A preferred variety to be used to prepare a rapeseed methyl ester composition of the invention is MSP05

A more preferred variety to be used to prepare a rapeseed methyl ester composition of the invention is MSP11.

### Example 9: a composition of the invention.

The oil is extracted from MSP13 varieties according to a method as described in example 1.

The resulting oil is then degummed and refined carrying out methods as described respectively in example 2 and in example 3.

From 3,07 kg of seeds, 1,32 kg of crude oil is obtained, and then 1,21 kg of refined oil.

Then a methanolysis as described in example 6 is perfomed resulting in 1,16 kg of methyl esters.

The yields are regarded as excellent.

The methyl esters content of the rapeseed methyl ester composition obtained from MSP13 by the process described in example 6 has been evaluated by gas chromatography and the results are summarized in the following table (Table XII).

**Table XII**

| Fatty acids | Content wt.% |
|---|---|
| C16:0 Palmitic | 3,40 |
| C18:0 Stearic | 1,59 |
| C18:1 Oleic | 83,44 |
| C18:2 Linoleic | 8,58 |
| C18:3 Linolenic | 1,36 |
| C20:0 Arachidic | 0,36 |
| C20:1 Eicosenoic | 1,10 |
| C22:0 Behenic | 0,17 |
| Total | 100,00 |

The rapeseed methyl ester composition obtained has been analysed and compared with the specifications of a biodiesel as established by the European Union. The results of such analysis are summed up in the following table (Table XIII)

**Table XIII**

| Parameters | Units | E.U. | MSP13 |
|---|---|---|---|
| Ester content | % mass | ≥96,5 | 99 |
| Cetane Number | - | ≥51 | 57,2 |
| Kinematic Viscosity (40 °C) | mm2/s | 3,5 to 5 | 4,71 |
| Pourpoint | °C | ≤0 | -15,0 |
| Water content | mg/kg | ≤500 | <50 |
| Acid Number | mg KOH/g | ≤0,5 | 0,07 |
| Saponification Number | mg KOH/g | - | 185,7 |
| Iodine Value | g I2/100 g | ≤120 | 91,7 |
| Peroxide Value | meq O2/kg | - | 2,13 |
| Unsaponifiable matter | % | - | 0,65 |
| Linolenic acid methyl ester | % | ≤12 | 1,36 |
| Glycerides content | % | ≤1,2 | 1,0 |
| Free glycerol | % | ≥0,02 | 0 |
| Phosphorus content | mg/kg | ≤10 | <5 |
| Oxidation stability | hours | ≥6 | 16,2 |

## Claims

1. Rapeseed alkyl-ester composition suitable for use as biodiesel, comprising more than 72%, 75%, 80%, or 85%, of mono-alkyl ester(s) of oleic acid, less than 7%, 6,5%, 6% or 5,5% of mono-alkyl-ester(s) of saturated fatty acids, and less than 4%, 3,5%, 3%, 2,5%, 2%, 1,5% or 1% of mono-alkyl ester(s) of linolenic acid, based on the total weight of mono-alkyl-esters of fatty acids in the composition.

2. Rapeseed alkyl-ester composition according to claim 1, wherein said mono-alkyl esters of saturated fatty acids comprise less than 4,5% or 3,5% of alkyl-ester(s) of palmitic acid, based on the total weight of mono-alkyl-esters of fatty acids in the composition.

3. Rapeseed alkyl-ester composition according to claim 1 or 2 further comprising less than 15%, 14%, 13%, 12%, 11%, 10%, 9% or 8% of mono-alkyl ester(s) of linoleic acid or less than about 20%, 19%, 18%, 17% or 16% of mono-alkyl ester(s) of poly-unsaturated fatty acids, based on the total weight of mono-alkyl-esters of fatty acids in the composition.

4. Rapeseed alkyl-ester composition according to any of claims 1 to 3 wherein said mono-alkyl esters are methyl esters.

5. Rapeseed alkyl-ester composition according to any of claims 1 to 3 wherein said mono-alkyl esters are ethyl esters.

6. Process for the preparation of a rapeseed alkyl-ester composition according to any of claims 1 to 5 comprising a transesterification step of an rapeseed oil comprising more than 72%; 75%, 80%, or 85% of oleic acid, less than 7%, 6,5%, 6% or 5,5% of saturated fatty acids and less than 4%, 3,5%, 3%, 2%, or 1% of linolenic acid, based on the total weight of the fatty acids in the oil.

7. A process according to claim 6, wherein said saturated fatty acids comprise less than 4,5% or 3,5% of palmitic acid, based on the total weight of the fatty acids in the oil.

8. A process according to claim 6 or 7, wherein the transesterification step consists of a methanolysis step.

9. A process according to claim 8, wherein the methanolysis step consists of a base catalysed methanolysis of the rapeseed oil.

10. A process according to claim 8, wherein the methanolysis step consists of a direct acid catalysed methanolysis of the rapeseed oil.

11. A process according to claim 8, wherein the methanolysis step consists first in the conversion of the rapeseed oil to its fatty acids and then in the conversion of said fatty acids to methyl esters of fatty acids.

12. A process according to any of claims 6 to 11 comprising, before the transesterification step, the steps of degumming the crude rapeseed oil, and of refining the resulting oil.

13. A process according to claim 12 comprising the step of bleaching the rapeseed oil after the refining step and before the transesterification step.

14. A process according to claim 13, wherein the rapeseed oil is extracted from one, two, or three of the varieties that are selected from the group consisting of the MSP05 variety, the MSP11 variety and the MSP13 variety.

## Patentansprüche

1. Raps-Alkylesterzusammensetzung, die sich zur Verwendung als Biodiesel eignet, umfassend mehr als 72 %, 75 %, 80% oder 85% Monoalkylester von Ölsäure, weniger als 7 %, 6,5 %, 6% oder 5,5% Monoalkylester von gesättigten Fettsäuren und weniger als 4 %, 3,5%, 3 %, 2,5%, 2%, 1,5% oder 1% Monoalkylester von Linolensäure, basierend auf dem Gesamtgewicht von Monoalkylestern von Fettsäuren in der Zusammensetzung.

2. Raps-Alkylesterzusammensetzung nach Anspruch 1, wobei die Monoalkylester von gesättigten Fettsäuren weniger als 4,5% oder 3,5% Alkylester von Palmitinsäure umfassen, basierend auf dem Gesamtgewicht von Monoalkylestern von Fettsäuren in der Zusammensetzung.

3. Raps-Alkylesterzusammensetzung nach Anspruch 1 oder 2, ferner umfassend weniger als 15 %, 14 %, 13 %, 12 %, 11 %, 10 %, 9% oder 8% Monoalkylester von Linolensäure oder weniger als ungefähr 20 %, 19 %, 18 %, 17% oder 16% Monoalkylester von mehrfach ungesättigten Fettsäuren, basierend auf dem Gesamtgewicht von Monoalkylestern von Fettsäuren in der Zusammensetzung.

4. Raps-Alkylesterzusammensetzung nach einem der Ansprüche 1 bis 3, wobei die Monoalkylester Methylester sind.

5. Raps-Alkylesterzusammensetzung nach einem der Ansprüche 1 bis 3, wobei die Monoalkylester Ethylester sind.

6. Verfahren zur Herstellung einer Raps-Alkylesterzusammensetzung nach einem der Ansprüche 1 bis 5, umfassend einen Umesterungsschritt eines Rapsöls, umfassend mehr als 72 %; 75 %, 80% oder 85% Ölsäure, weniger als 7 %, 6,5 %, 6% oder 5,5% gesättigte Fettsäuren und weniger als 4 %, 3,5%, 3 %, 2% oder 1% Linolensäure, basierend auf dem Gesamtgewicht der Fettsäuren in der Zusammensetzung.

7. Verfahren nach Anspruch 6, wobei die gesättigten Fettsäuren weniger als 4,5% oder 3,5% Palmitinsäure umfassen, basierend auf dem Gesamtgewicht der Fettsäuren in der Zusammensetzung.

8. Verfahren nach Anspruch 6 oder 7, wobei der Umesterungsschritt aus einem Methanolyseschritt besteht.

9. Verfahren nach Anspruch 8, wobei der Methanolyseschritt aus einer basenkatalysierten Methanolyse des Rapsöls besteht.

10. Verfahren nach Anspruch 8, wobei der Methanolyseschritt aus einer direkten säurekatalysierten Methanolyse des Rapsöls besteht.

11. Verfahren nach Anspruch 8, wobei der Methanolyseschritt zunächst in der Umwandlung des Rapsöls in dessen Fettsäuren und der darauffolgenden Umwandlung der Fettsäuren in Methylester von Fettsäuern besteht.

12. Verfahren nach einem der Ansprüche 6 bis 11, umfassend vor dem Umesterungsschritt den Schritt des Befreiens des rohen Rapsöls von Gummi und des Raffinierens des entstehenden Öls.

13. Verfahren nach Anspruch 12, umfassend den Schritt des Bleichens des Rapsöls nach dem Raffinierungsschritt und vor dem Umesterungsschritt.

14. Verfahren nach Anspruch 13, wobei das Rapsöl aus einer, zwei oder drei der Sorten extrahiert wird, die aus der Gruppe bestehend aus der MSP05-Sorte, der MSP11-Sorte und der MSP13-Sorte ausgewählt sind.

## Revendications

1. Composition d'esters alkyliques de colza utilisable en tant que biodiésel, comprenant plus de 72 %, 75 %, 80% ou 85% d'un ou plusieurs esters monoalkyliques d'acide oléique, moins de 7 %, 6,5 %, 6% ou 5,5% d'un ou plusieurs esters monoalkyliques d'acides gras saturés, et moins de 4 %, 3,5%, 3 %, 2,5%, 2 %, 1,5% ou 1 % d'un ou plusieurs esters monoalkyliques d'acide linolénique, par rapport au poids total d'esters monoalkyliques d'acides gras dans la composition.

2. Composition d'esters alkyliques de colza selon la revendication 1, dans laquelle lesdits esters monoalkyliques d'acides gras saturés comprennent moins de 4,5 % ou 3,5 % d'un ou plusieurs esters alkyliques d'acide palmitique, par rapport au poids total d'esters monoalkyliques d'acides gras dans la composition.

3. Composition d'esters alkyliques de colza selon la revendication 1 ou 2, comprenant en outre moins de 15 %, 14 %, 13 %, 12 %, 11 %, 10 %, 9 % ou 8 % d'un ou plusieurs esters monoalkyliques d'acide linoléique ou moins d'environ 20 %, 19 %, 18 %, 17 % ou 16 % d'un ou plusieurs esters monoalkyliques d'acides gras polyinsaturés, par rapport au poids total d'esters monoalkyliques d'acides gras dans la composition.

4. Composition d'esters alkyliques de colza selon l'une quelconque des revendications 1 à 3, dans laquelle lesdits esters monoalkyliques sont des esters méthyliques.

5. Composition d'esters alkyliques de colza selon l'une quelconque des revendications 1 à 3, dans laquelle lesdits esters monoalkyliques sont des esters éthyliques.

6. Procédé pour la préparation d'une composition d'esters alkyliques de colza selon l'une quelconque des revendications 1 à 5, comprenant une étape de trans-estérification d'une huile de colza comprenant plus de 72 %, 75 %, 80 % ou 85 % d'acide oléique, moins de 7 %, 6,5 %, 6 % ou 5,5 % d'acides gras saturés et moins de 4 %, 3,5 %, 3 %, 2 % ou 1 % d'acide linolénique, par rapport au poids total des acides gras dans l'huile.

7. Procédé selon la revendication 6, dans lequel lesdits acides gras saturés comprennent moins de 4,5 % ou 3,5 % d'acide palmitique, par rapport au poids total des acides gras dans l'huile.

8. Procédé selon la revendication 6 ou 7, dans lequel l'étape de trans-estérification consiste en une étape de méthanolyse.

9. Procédé selon la revendication 8, dans lequel l'étape de méthanolyse consiste en une méthanolyse, catalysée par une base, de l'huile de colza.

10. Procédé selon la revendication 8, dans lequel l'étape de méthanolyse consiste en une méthanolyse directe, catalysée par un acide, de l'huile de colza.

11. Procédé selon la revendication 8, dans lequel l'étape de méthanolyse consiste d'abord en la conversion de l'huile de colza en ses acides gras et ensuite en la conversion desdits acides gras en esters méthyliques d'acides gras.

12. Procédé selon l'une quelconque des revendications 6 à 11, comprenant, avant l'étape de trans-estérification, les étapes de démucilagination de l'huile de colza brute, et de raffinage de l'huile résultante.

13. Procédé selon la revendication 12, comprenant l'étape de blanchiment de l'huile de colza après l'étape de raffinage et avant l'étape de trans-estérification.

14. Procédé selon la revendication 13, dans lequel l'huile de colza est extraite d'une, deux ou trois des variétés choisies dans le groupe constitué par la variété MSP05, la variété MSP11 et la variété MSP13.
